# EUROPEAN PATENT SPECIFICATION

(11) **EP 3 204 152 B1**
(45) Date of publication and mention of the grant of the patent: **02.01.2019**
(21) Application number: 15775000.1
(22) Date of filing: 21.09.2015
(51) Int. Cl.: B01D 53/00, B01D 53/48, B01D 53/58, B01D 46/00, B01D 53/68, B01D 53/72, B01D 53/75

(54) **GAS CLEANER FOR A GASIFIER AND METHOD OF ITS USE**
GASREINIGUNGSVORRICHTUNG FÜR EINEN VERGASER UND SEINE VERWENDUNG
DISPOSITIF DE NETTOYAGE D'UN GAZ POUR UN GAZÉIFICATEUR ET MÉTHODE D'UTILISATION DE CETTE DISPOSITIF

(30) Priority: 08.10.2014 IN 3195MU2014
(43) Date of publication of application: 16.08.2017
(73) Proprietor: Ankur Scientific Energy Technologies Pvt. Ltd., Vadodara, Gujarat 390024 (IN)
(72) Inventor: JAIN, Bhag Chand, Vadodara Gujarat 390024 (IN); NAGORI, Govind Prasad, Vadodara Gujarat 390024 (IN)
(74) Representative: Müller-Boré & Partner Patentanwälte PartG mbB
(86) International application number: PCT/IB2015/057249
(87) International publication number: WO 2016/055884

(56) References cited:
- EP-A2- 0 146 407
- CA-A1- 2 013 264
- JP-A- H11 290 642
- US-A- 4 197 278
- US-A1- 2011 277 639

## Description

### TECHNICAL FIELD

The present subject matter relates to a gas cleaner and method thereof. More specifically, the gas cleaner and the method relate to a gas cleaner for a gasifier.

### BACKGROUND

Gasifiers are used for producing fuel-gases from bio-mass, waste and other substances. Amongst many substances coal is one of the popular substance used in gasifiers, because coal yield better combust ible gases. Fuel-gases are combustible and have a number of applications in everyday life. While Fuel-gases are produced in the gasifier, they remain unusable unless cleaned properly in a gas cleaner. Generally, fuel-gases produced by the gasifier include impurities and contaminations. These impurities and contaminations may be in the form of suspended particles of ashes, carbon, char etc. or gases such as H₂S, HCL, NH₃ etc. Each of these impurities demonstrates different chemical and physical characteristics and must be removed from the fuel-gas without affecting the combust ible properties of the fuel-gas. Therefore, the gas cleaner must clean/removing these impurities/contaminations from the fuel-gas produced by the gasifier while ensuring that the cleaned gas remains useable. In addition, process of removing/cleaning must be such that it produces minimum or no waste and does have minimum or no effect on environment. In such circumstances, achieving optimal results from the gas cleaner not only becomes critical but also challenging.

Gas cleaners employ, water scrubbing of fuel-gas for cleaning. Water scrubbing requires large quantity of pressurized water and power. Generally water scrubbing is an important stage of gas cleaning as during water scrubbing contaminations such as H₂S, HCL, NH₃ etc. gets dissolved in the water. Water scrubbing further scrubs out particulates from the fuel-gas and when water comes in contact with the fuel-gas, the tar/poly-cyclic aromatic hydrocarbons (PAHs) present in gas also get condensed and gets scrubbed away by the water.

Due to this vary fact, that the fuel-gas contaminations such as particles, tar, PAHs and other gases gets dissolved or mixed in the water, the water gets contaminated resulting in thick sludge and polluted water and makes the water non-recyclable or at least requires expensive treatment before recycling. Cleaning polluted/contaminated water for any further use or even to treat water to make it disposable quality, is expensive and challenging. Furthermore, scrubbing results in loss of temperature, pressure of the fuel-gas.

Therefore, it is desirable, to have a gas cleaner and a method thereof that does not above the above and other limitations.

### SUMMARY

In JPH11290642A is described a high temperature removing device for corrosive gas, comprising a filter arrangement.

Generally the ceramic candles may be used for removing particles at high temperature such as 350°C to 900°C, however, ceramic candles get clogged quickly and cleaning of the ceramic candles is complicated and problematic. This is because high temperature operation of ceramic candles requires high temperature metal alloys and heat exchangers, in which the particulates often get deposited. Cleaning through candles of the ceramic candle results in chocking of the candles. In addition, the gasifiers often do not generate fuel-gas at temperatures as high as 900°C. Therefore, ceramic cand le in respect of handling high temperature is overkill for the purpose of gas cleaners that clean fuel-gas generated by gasifiers. Furthermore, condensation of tar during cold start and shut down, increases pressure drop.

Convent ional gas cleaner do not use fabric filters for cleaning gas for two reasons. First reason being, temperature intolerance of the fabric filter. Conventional fabric filters are not able to handle high temperature of the fuel-gas as at high temperatures the fabric filter get damaged. Therefore, often the fuel-gas is water scrubbed, this bring down the temperature. However, it results in other problems such as creating sludge, the fabric filter also do not hand le the sludge well, as they get clogged. Cleaning clogged fabric filter is extremely challenging and time consuming job.

The second reason being, in effectiveness of the fabric filters at low temperatures, where the temperatures are lower than the dew point temperature of the fuel-gas. When the temperature of the fuel-gas is below the dew point temperature, the fuel-gas condenses on the fabric filter. The condensed dew and the tar of the fuel-gas clog the fabric filter. Cleaning of this clogged fabric filter is very difficult. Therefore rendering the fabric filter not good for cleaning the fuel-gas at low temperature.

The present subject matter provides a solution to above and other problems. The present subject matter provides a fabric that can handle high temperatures. The fabric of the present subject matter is provided with a coating of an inert material that increases temperature resistance of the fabric and therefore increases its capability to operate at high temperature without getting damaged. In some embodiments, the inert material coating may be inorganic coating which enhances the dynamic mechanical properties of the fabric. This gives first filter improved high temperature performance, resistance to thermal excursion and abrasion. In some cases, the fabric filter designed to operate on temperature ranges 240°C to 370°C. Furthermore, the fabric filter is provided layers of material such as dolomite, talcum powder, calcium carbonate (CaCO₃). These layers prevent condensation of fuel-gas on the fabric filter therefore avoiding any wet clogging of the fabric filter. After the fuel-gas has undergone cleaning using the fabric filter, at a second stage the fuel-gas is cooled below the dew point temperature, this cause inherent moisture of the fuel-gas to condense. The present subject matter provides use of the inherent moisture of the fuel-gas for removing water soluble impurities such as NH₃, H₂S and hence substantially eliminates the water scrubbing of the fuel-gas and therefore substantially eliminates direct contact of fuel-gases with water, while ensuring that impurities/contaminations of fuel-gases that require water scrubbing are cleaned using inherent moisture present with the fuel-gases. Eliminating direct contact of water from external source with fuel-gas eliminates disadvantages associated with water scrubbing for example, water pollution, sludge generation etc.

Effectively, the present subject matter solves the above and other problems by achieving removal of particulates from the fuel-gas while the fuel-gas is hot that is before, fuel-gas reaches its dew point temperature and the vapors of the fuel-gas remain in gaseous state. This results in number of advantages, one being that the cleaning and/or replacing of filter becomes very easy as no condensation occurs and water is not used in the process.

The fabric filter of the present subject matter not only operates in the high temperature range of 240°C to 370°C effect ively but also cleaning of the fabric filter is lot simple. The layers of coating of tar absorbing inorganic powder of dolomite/talc/CaCO₃ protects fabric filter from chocking due to condensation. Further, the present subject matter provides extracting the fuel-gas from the gasifier and combusting the fuel-gas till temperature of the fuel-gas reaches well above the tar dew point to avoid condensation in fabric filter. Combust ing the fuel-gas at the combustor also ensures that the undesired fuel-gas gets burned at the combustor and therefore do not get released in the environment and hence preventing environment pollution.

According to an aspect of the present subject matter, a gas cleaner according to claim 1 is provided.

According to one embodiment, the inner material is configured to provide the fabric filter strength to operate at the temperature range. Accord ing to a second embodiment the second layer includes dolomite powder, chalk powder, talcum powder and the second layer is configured to prevent condensation of the fuel-gas. According to a third embodiment the temperature range is about 280 °C and about 370 °C. According to a fourth embodiment the receiver includes a combustor, the combustor is configured to extract the fuel-gas from the gasifier, and the combustor is further configured to burn the fuel-gas to adjust temperature of the fuel-gas and to prevent environmental pollution. Accord ing to fifth embodiment the temperature controller comprises an insulated line and an uninsulated line, and the temperature controller is configured to pass the fuel-gas through any one or both of the insulated line and uninsulated line based on temperature of the fuel-gas and configured to supply the fuel-gas to the first filter. According to a sixth embodiment the condenser comprises a mist eliminator. The gas cleaner further comprises a second filter, the second filter comprises a fine filter and a pleated filter, wherein the fine filter includes saw dust and the pleated filter comprises a fabric filter to extract ing suspended part icles from the fuel-gas. Accord ing to a seventh embodiment the gas cleaner further comprises a treatment system, the treatment system is coupled to the condenser and configured to treat the condensate. The gas cleaner is coupled to the gasifier.

According to another aspect, the present subject matter provides a method according to claim 8.

The method includes providing the fabric filter strength to operate at the temperature range by supplying the inert material. According a first embodiment the method includes providing the fabric filter with dolomite powder, chalk powder, talcum powder to configure the fabric filter to prevent condensation of the fuel-gas. According to a second embodiment the temperature range is about 280 °C and about 370 °C. According to a third embodiment the configuring the receiver includes providing a combustor with the receiver, the combustor is configured to extract the fuel-gas from the gasifier, and the combustor is further configured to burn the fuel-gas to adjust temperature of the fuel-gas and to prevent environmental pollution. Accord ing to a fourth embodiment the configuring the receiver includes providing the temperature controller with an insulated line and an uninsulated line, and configuring the temperature controller to pass the fuel-gas through any one or both of the insulated line and uninsulated line based on temperature of the fuel-gas and configured to supply the fuel-gas to the first filter. According to a fifth embodiment the coupling the condenser includes providing the condenser with a mist eliminator. The method includes coupling the condenser to a second filter, and providing the second filter with a fine filter and a pleated filter, wherein the fine filter includes saw dust and the pleated filter comprises a fabric filter to extracting suspended part icles from the fuel-gas. Accord ing to an eighth embodiment the method includes coupling a treatment system, to the condenser and configured to treat the condensate. The method includes coupling the receiver to the gasifier.

### BRIEF DESCRIPTION OF DRAWINGS

The subject matter shall now be described with reference to the accompanying figures, wherein:
**FIG. 1** shows a schematic block diagram of a gas cleaner according to an embodiment of the present subject matter;
**FIG. 2** shows a schematic block diagram of a gas cleaner in more details according to an embodiment of the present subject matter and **FIG. 2a** through **2e** show enlarged blocks of **FIG. 2**; and
**FIG. 3** shows a schematic block diagram of a method of manufacturing a gas cleaner according an embodiment of the subject matter.

### DETAILED DESCRIPTION

Before the present subject matter is further described in more details, it is to be understood that the subject matter is not limited to the particular embodiments described, and may vary as such. It is also to be understood that the terminology used throughout the preceding and forthcoming discussion is for the purpose of describing particular embodiments only, and is not intended to be limiting. It must be noted that as used herein, the singular forms "a", "an", and "the" include plural references unless the context clearly and expressly dictates otherwise.

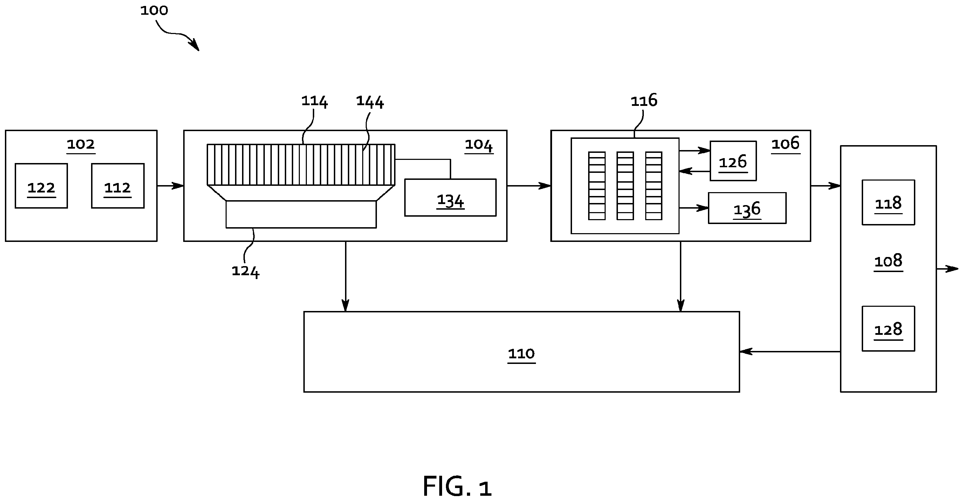

**FIG. 1** shows a schematic block diagram of a gas cleaner **100** according to an embodiment of the present subject matter. The gas cleaner **100** has a receiver **102**, a first filter **104**, a condenser **106**, a second filter **108**, a treatment system **110**. The receiver **102** includes a combustor **122** and a temperature controller **112**. The first filter **104** includes a fabric filter **114**, a char and ash collector **124**, a reverse pulse cleaner **134**, and fabric **144**. The condenser **106** includes a cooler **116**, a chiller **126** and a mist eliminator **136**. The second filter **108** includes a pleated filter **118** and a fine filter **128**.

Operation and construction of the gas cleaner **100** may be understood as follows. The receiver **102** is configured to receive fuel-gas from a gasifier (not shown). In some embodiments, the gasifier may be the gasifier as described in the Indian Patent Application number **3070/MUM/2014**. The contents of the aforementioned patent application are incorporated in this specification by reference and are made part of this specification. The receiver **102** is coupled to the first filter **104**, and the first filter **104** is coupled to the condenser **106**. The condenser **106** is coupled to the second filter **108**, and the treatment system **110** receives discharge from the first filter **104**, the condenser **106** and the second filter **108**.

The receiver **102** includes the combustor **122**. In some embodiments, the combustor **122** may be configured to flare the fuel-gas. In some other embodiment, the combustor is part of the gasifier and the fuel-gases are fed back to for combust ion. The receiver **102** includes the temperature controller **122**. The temperature controller **122** may include a number of lines. In some embodiments, some of the lines may be insulated and other lines may be uninsulated. The temperature controller **122** may than alternatively or simultaneously pass the fuel-gas or any part thereof through these insulated and uninsulated lines according to the temperature of the fuel-gas. In some embodiments, the desired temperature of the fuel-gas is between a range of 350°C-400°C. Once a desired temperature of the fuel-gas is achieved the fuel-gas is than passed to the first filter **104**.

The first filter **104** includes the fabric filter **114**, the fabric filter **114** includes a number of layers of the fabric **144**. In some embodiments, the fabric **144** is configured to clean the fuel-gas at temperatures as high as 370°C and higher on continuous operation.

The other fabrics can work only upto 240-260°C and thus the condensation problem remains with these fabric. The high temperature fabric used overcome this problem of condensation. When the fuel-gas passes through the fabric **144**, suspended particles of the fuel-gas get stuck on the fabric **144**. The suspended part icles are dropped into the char and ash collector **124**. However some part icles get stuck to the fabric **144** removing these particles to keep the filtering going is important. The present subject matter provides the reverse pulse cleaner **134**. The reverse pulse cleaner **134** is generally a compressor which blows high pressure air in a direction opposite to which the fuel-gas passes through the fabric **144**. This allows that the suspended part icles of the fuel-gas that are stuck on the fabric **144** are dropped into the char and ash collector **114**.

The fuel-gas after passing through the first filter **104** still has number of constituents that are undesirable, such as H₂S, NH₃, COS, halides etc. These const ituents are water soluble, but because the present subject matter does not use water scrubbing, removing these constituent is challenging. The subject matter, instead of using any external source of water for scrubbing the fuel-gas deploys inherent water content of the fuel-gas to remove water soluble constituents. Using inherent water, which is in the vapor form in the fuel-gas not only removes the water from the fuel-gas but also removes other water soluble undesirable const ituents of the fuel-gas. This process removes water soluble constituents sufficiently enough from the fuel-gas, to ensure that the fuel-gas may be used in further desired application. At the next stage, the fuel-gas is passed to the condenser **106** includes the cooler **116**, the chiller **126** and the mist eliminator **136**. The condenser **106** may includes a number of cooler tubes, these cooler tubes may provide the fuel-gas an environment that enables condensation of the constituents of the fuel-gas that may be condensate, resulting in a condensate. The condensate may further dissolve other undesirable const ituents of the fuel-gas such as H₂S, NH₃, and halides etc. The chiller **126** plays a role insuring that the temperature is maintained at level where condensation may occur. The mist eliminator **136** removes mist from the fuel-gas. The condensate with all the dissolved elements may be passed to the treatment system **110** whereas the fuel-gas passes to the second filter **108**.

The second filter **108** is configured to further clean the fuel-gas to remove fine part icles. The second filter **108** includes the fine filter **118** and the pleated filter **128**. Fine filter **118** comprises graded saw dust of above 0.5 mm and below 3 mm. Pleated filter **128** comprises of filter media made of polyester media with polytetrafluoroethylene (PTFE) coating. This polyester media is made of high tenacity filament yarn without using any binding agent. The filter media are pleated in different pleated depths and height to accommodate desired filtration area.

The filtered fuel-gas from the second filter **108** may be than passed to engine or any other application it has been extracted for. Discharge from the second filter may be sent to the treatment system **110**. Accord ing to one embodiment, the treatment system **110** may include a number of elements such as acid purifiers, distillers etc. Discharge from the treatment system **110** may be sent to evaporator for evaporating the liquid.

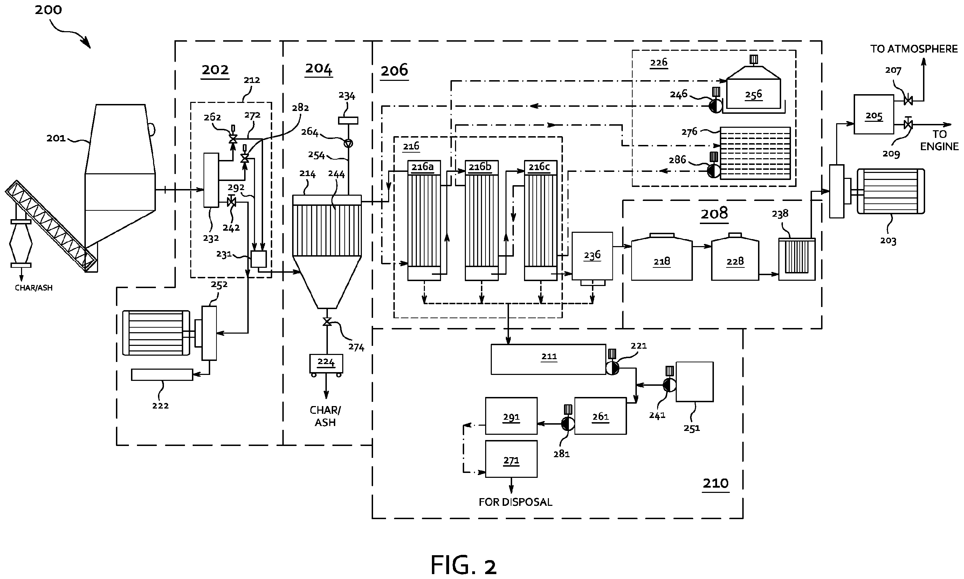

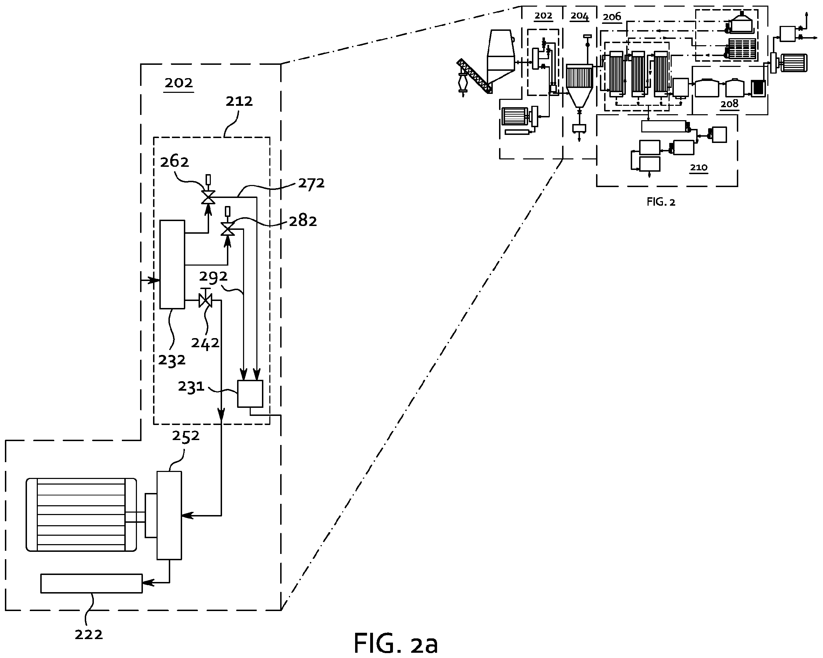

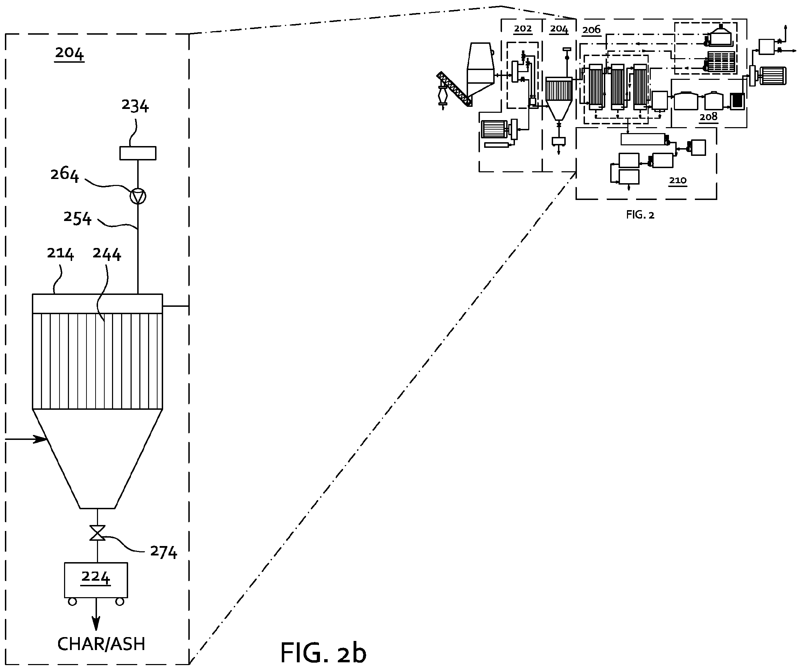

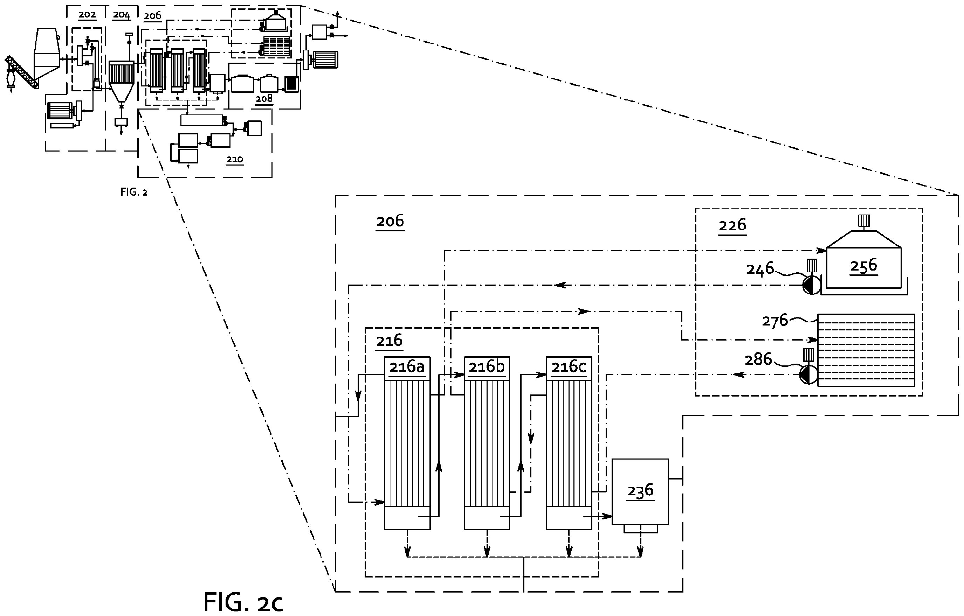

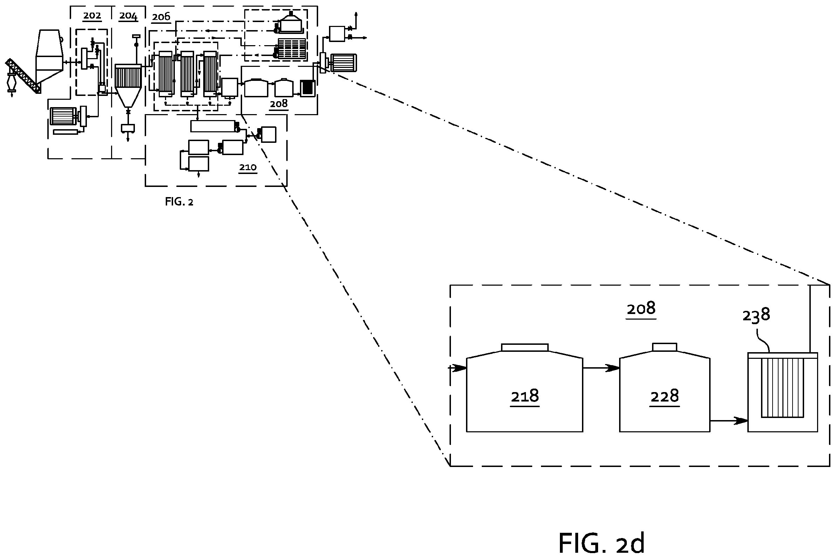

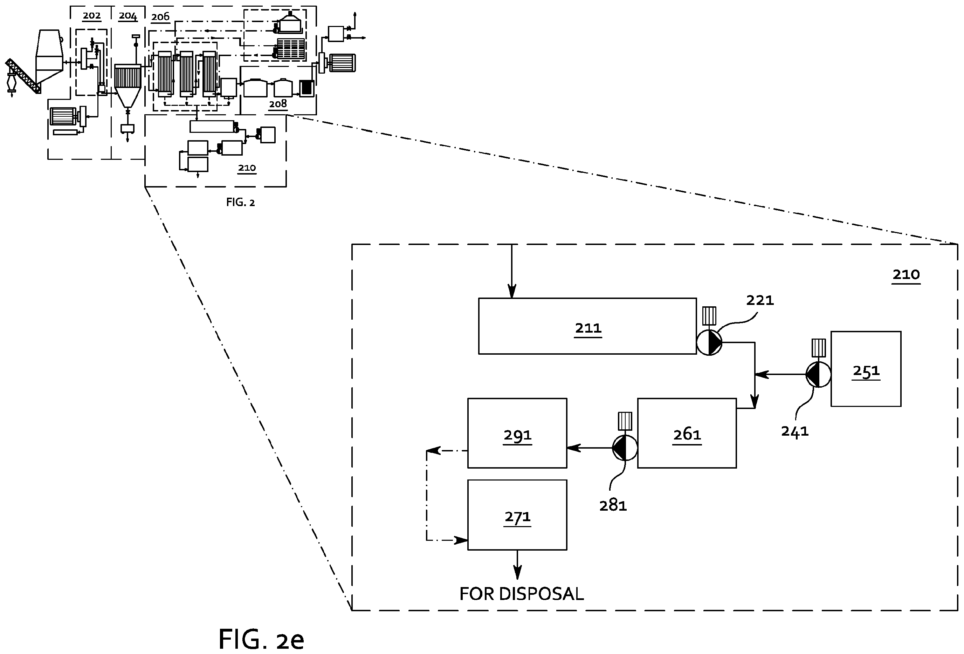

**FIG. 2** shows a schematic block diagram of a gas cleaner **200** in more details according to an embodiment of the present subject matter. The gas cleaner **200** has a receiver **202**, a first filter **204**, a condenser **206**, a second filter **208**, a treatment system **210**. The receiver **202** includes a hot blower **252**, a combustor **222** and a temperature controller **212** and the temperature controller includes header boxes **232**, and **231**, valves **262**, **242** and **282**, an insulating line **272**, uninsulating line **292**. The firs filter **204** includes a fabric filter **214**, fabric **244** a char and ash collector **224**, **a** reverse pulse cleaner **234**, FRL **264** where FRL **264** being a flow regulator, a direction line **254** and a valve **274**. The condenser **206** includes a cooler **216,** a chiller **226** and a mist eliminator **236.** The cooler **216** includes cooling tubes **216a, 216b** and **216c**. The chiller **226** includes a refrigerator **276,** a cooling tower **256** and pumps **246** and **286.** The Second filter **208** includes fine filters **218** and **228** and pleated filter **238.** The gas cleaner **200** further includes a dry blower **203,** header box **205,** valves **207** and **209.** The treatment system **210** includes a condensate collector **211,** a pump **221,** an acid dosing pump **241,** an acid tank **251,** collector tanks **261** and **271** a pump **281,** and charcoal filter **291.**

The **FIG. 2a** through **2e** show enlarged blocks of **FIG. 2****.** In that, **FIG. 2a** shows enlarged receiver **202**, **FIG. 2b** shows enlarged first filter **204** **FIG. 2c** shows enlarged condenser **206,** **FIG. 2d** shows enlarged second filter **208,** and **FIG. 2e** shows enlarged treatment system **210**. **FIG. 2** and **FIG. 2a** through **2e** are now referred to collectively.

Operation and construction of the gas cleaner **200** may be understood as follows. The gas cleaner **200** is coupled to the gasifier **201.** The gas cleaner **200** may also be called a dry gas cleaning system (DGCS). According to this embodiment, when the hot blower **252** is started, the gasifier **201** starts operating. The hot blower **252** pulls the fuel-gas from the gasifier **201** into the header box **232**. In some embodiments, the fuel-gas may be sent to the combustor **222,** by turning the valve **242** on, depending on the temperature of the fuel-gas where the fuel-gas may be flared so that a desirable temperature is reached. The combustor **222** may be within the gasifier **210** or alternatively, the receiver **202** may be provided with a combustor **222** which is configured to flare the fuel-gas to heat the gas to reach the desirable temperature. In some embodiment, when the fuel-gas received in the receiver **202** is at the desirable temperature or within a range that is desirable or more than the temperature that is desirable, may by-pass the combustor **210**. In some embodiments the desired temperature range is 300-350°C.

Once the temperature of the fuel-gas is achieved the dry blower **203** is turned on. The dry blower **203** pulls the fuel-gas, through the header box **232.** At this stage one or both of the valves **262** and **282** may be turned on. The valve **262** controls flow of the fuel-gas through the insulating line **272.** The valve **282** controls flow of the fuel-gas through the unisulating line **292.** When the fuel-gas passes through the insulating line **272** the temperature of the fuel-gas remains substantially unchanged because the line **272** is insulated. Whereas, when the fuel-gas passes through the uninsulating line **292,** heat of the fuel-gas may be radiated into atmosphere causing reduction in the temperature of the fuel-gas. In some embodiments, the valves **262** and **282** are sequentially turned on based on the temperature of the fuel-gas. In some other embodiments, valves **262** and **282** are simultaneously turned on or off based on the temperature of the fuel-gas. In some embodiments, only one of the valves **262** and **282** is turned on based on the temperature of the fuel-gas. Both the insulated line **272** and uninsulated line **292** are coupled to the header box **231.** Selectively passing of the fuel-gas through the insulated line **272** and uninsulated line **292** of the temperature controller **212** controls the temperature of the fuel-gas entering the first filter **204** through the header box **231.** In some embodiments, the temperature of the fuel-gas entering the header box **231** is in a range between 300°C to 370°C. Controlling the temperature of the fuel-gas is important, as the temperature must be within a range that does not damage the fabric **244** and the fuel-gas remains substantially in vapor state.

The fuel-gas passes through the header box **231** to the first filter **204** and into the fabric filter **214**. The fabric **244** of the fabric filter **214** is made from customized fabric, in that, textile of fabric **244** is coated to give excellent filtration at high temperatures. The inorganic coating enables the fabric to sustain high temperatures of fuel-gas. The textile of fabric **244** has been coated to give it non sticky, non-abrasive surface for excel lent filtration at high temperatures of up to 370°C. The fabric **244** is coated with layer of inert material such as dolomite powder, chalk powder, talcum powder etc. this prevents condensation on the fabric **244** when the fuel-gas passes through the fabric **244.** The first filter **204** removes carbon part icles through surface filtration and tar through adsorption on carbon particles. Further, when a layer of carbon particles that are suspended in the fuel-gas get deposited on the fabric **244,** the carbon particles themselves prevent condensation. In some embodiments, the fuel-gas that enters the first filter **204** is as hot as 325°C - 370°C through the fabric **244** which is pre-coated as discussed above and exits the first filter **204** leaving the tar and part iculate deposited on the fabric **244.**

The layer of deposits of carbon part icles etc becomes so thick that it prevents even passing of the fuel-gas through, it comes pertinent that this deposits must be cleaned. The challenge is to remove each layer of fabric **244** and clean it is not practical, time consuming and costly. The subject matter solves this problem by providing the reverse pulse cleaner **234.** The reverse pulse cleaner **234** blows air or nitrogen gas at high pressure in the direct ion opposite to the flow of fuel-gas through the direction line **254.** The reverse pulse cleaner **234** may be controlled using the FRL **264.** The reverse pulse cleaner **234** may be set to blow at predetermined intervals. The predetermined intervals may be set according to the amount of fuel-gas entering the receiver **202** using a timer (not shown). At intervals set by the timer, bursts of compressed nitrogen gas/air are released in reverse direction line **254,** thus expanding fabric **244** successively to the maximum size and dislodging the deposits. As soon as expansion energy is lost, the fabric **244** return to normal filtering position and deposits are pulsed off into the char and ash collector **224** through the valve **274.** The ash and char collected in the ash and char collector **224** may be discharged or sent to the treatment system **210**. In one embodiment, the reverse pulse cleaner **234** may be set to blow the air based on pressure differential observed across the first filter **204.** In one embodiment, the reverse pulse cleaner **234** starts blowing when differential pressure is between a range of 80-90 mm of water gauge and stops when the differential pressure is below 80 mm. While cleaning of the fabric **244** is required however, the cleaning of the fabric **244** must be done in a manner that not all the particle of tar accumulated at the fabric **244** must be removed but, some part icles must remain on the fabric **244** to prevent direct exposure of the fabric **244** and the fuel-gas. By controlling pressure differential across the fabric **244** while blowing the reverse pulse cleaner **234** only certain amount of the accumulated particles are released from the fabric **244.** A layer of carbon /tar/ accumulated part icles further protects fabric from direct contact of condensation and also filtered out fine particles from the gas increasing filtration efficiency.

The fuel-gas that exits from the first filter **204** enters the condenser **206.** The cooler **216** receives the fuel-gas in the cooling tube **216a.** According to one embodiment, the cooling tube **216a** may be kept around 32°C by running water around the cooling tube **216a** using the chiller **226.** The cooling tower **256** and pump **246** may be used for running water. Accord ing further embodiment, the cooling tubes **216a** through **216c** may be successively at lower temperatures relatively to each other. For example the cooling tube **216c** is at the lowest temperature compare to the cooling tube **216a** and **216b.** The cooling tube **216b** may be at a lower temperature as compared with the temperature of the cooling tube **216a**. In some embodiment, the cooling tubes **216b** and **216c** are chilled at about 8°C, using the refrigerator **276** and pump **286.** In some embodiments, the chiller **226** may use dry ice, liquid nitrogen etc, in some other embodiments the chiller **226** may use chilled water that runs around the cooling tubs **216a** through **216c**. It shall become clear to a person skilled in artthat more such cooling tubes may be deployed to provide redundancy of cooling tubes according to the fuel-gas production consideration. Running the fuel-gas through the cooling tubes **216a** through **216c** causes vapors of the fuel-gas to condense and produce condensate. Further some constituents such as H₂S and halides gets dissolved in the condensate and therefore removing not only undesirable vapors from the fuel-gas but also other undesirables condensate soluble constituents from the fuel-gas. The condensate may be than supplied to the treatment system **210**.

The fuel-gas may pass to the mist eliminator **236** mist is removed from the fuel-gas. The fuel-gas is than passed to the second filter **208.** At the second filter **208** the fuel-gas may be received at fine filter **218** and subsequently move to the fine filter **228**. The fine filter **218** and **228** may include filter media such as saw dust that remove fine particles, moisture and tar. The fuel-gas then passes through the pleated filter **238.** The pleated filter **238** may include fabric filter. In some embodiments, the fabric of the pleated filter may be of the rating 0.5 microns. The pleated filter **238** arrest very fine particles that overall loading is reduced to below 5 mg/Nm3 which is generally required for making the fuel-gas useable in engines etc.

The fuel-gas may be now sucked by the blower **203** into the header **205** from where the fuel-gas may be sent to an engine through the valve **209** or to the atmosphere for burning through the valve **207.** Discharge collected in the second filter **208** may be sent to the treatment system **210**.

The present subject matter also describes the treatment system **210** that may receive discharge from the receiver **202**, first filter **204,** condenser **206** and the second filter **208.** In some embodiments, discharge/condensate may be collected at the condensate collector **211** for treatment. The discharge/condensate collected then may be pumped using pump **221** and may be acid treated in the collector tank **262** using the acid disposing pump **241,** which takes acid from the acid tank **251**. In some embodiments, concentrated sulphuric acid may be used. Subsequently the acid treated discharge/condensate may be sent to the collector tank **291** using the pump **281** where charcoal filter may remove colour and odour. The treated condensate can be disposed off after further treatment as per the local norms.

It shall become clear to a person skilled in art that each of the elements of the gas cleaner may be provided in redundancies, for example there may be a couple of first filter **204** or the condenser **206** or any part thereof may be provided in redundancy according to the according to the fuel-gas production, cost and other considerations.

Thus, the present subject matter provides a gas cleaner that is easy and simple to hand le because the undesirable const ituents are removed from the fuel-gas without using water scrubbing of the fuel-gas and requires no special heat exchanger. Therefore the fuel-gas remains substantially dry. Further, does not require cooling the fuel-gas before removing the suspended particles from the fuel-gas. The hot and cleaned fuel-gas is cooled to remove condensate using condenser **204** that has number of cooling tubes **216a** through **216c** that operate on different temperatures for example, cooled water of different temperatures may be circulated around each of the cooling tubes **216a** through **216c** respectively. By adjusting the flow of cooling water in cooling tubes **216a** through **216c** heat exchanger can be adjusted to get higher outlet temperatures, thereby making this heat relatively of higher quality and more useful. For example, in cold climates, it could be easily used for space heat ing as well as hot water supply. In other areas, the heat could be used for a number of drying applications. Further, the fuel-gas is chilled to a temperature at which most of the condensable are condensed and removed from the fuel-gas.

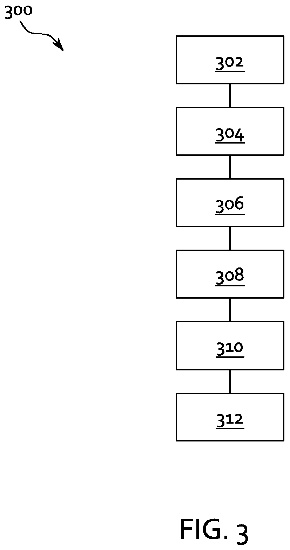

**FIG. 3** shows a schematic block diagram **300** of a method of manufacturing a gas cleaner according an embodiment of the present subject matter. According to an aspect of the method **300,** at block **302** a receiver is configured to receive fuel-gas from a gasifier. The receiver comprises a temperature controller configured for controlling temperature of the fuel-gas. The receiver is provided with a combustor. The combustor is configured to extract the fuel-gas and burns it to prevent causing any environmental pollution that the unburned gas my cause. The receiver includes the temperature controller with an insulated line and an uninsulated line. The temperature controller is configured to pass the fuel-gas through any one or both of the insulated line and uninsulated line based on temperature of the fuel-gas and configured to supply the fuel-gas to the first filter. At block **304** a first filter is coupled to the receiver. The first filter is a fabric filter having coat ing of inert material and a second layer of dolomite powder, chalk powder, talcum powder etc to protect fabric and prevents fuel-gas condensation on the fabric and configured to operate at a temperature range at within which the fuel-gas maintains its gaseous state. At block **306** a condenser is coupled to the first filter. The condenser configured control the temperature of the fuel-gas to obtain condensate by condensing constituents of the fuel-gas that are condensable and to facilitate dissolving constituents of the fuel-gas dissolvable in the condensate. The condenser includes a mist eliminator. According to a further embodiment. At block **308,** the condenser is coupled to a second filter. The second filter comprises a fine filter and a pleated filter. The fine filter includes saw dust and the pleated filter comprises a fabric filter to extracting suspended part icles from the fuel-gas. At block **310** a treatment system is coupled to the condenser. The treatment system is configured to treat the condensate. At block **312,** the receiver is coupled to the gasifier and the second filter is coupled to an engine.

Thus, the present subject matter describes a gas cleaner, a gasifier having the gas cleaner and a system having receiving fuel-gas from the gas cleaner. The system may include an engine. The gas cleaner, is a dry gas cleaning system. The gas cleaner removes the part iculates and condensable aromatic hydrocarbons without the use of water scrubbing. The fuel-gas in the gas cleaner does not come in direct contact with water and substantial particulates are removed before the fuel-gas is cooled. Because, almost no process water generat ion and hence no elaborate process water treatment is needed. Since there is no process water generation, there is no need to have large water inventory as required in wet cleaning system. Further, only small quantity of condensate is generated which can be easily treated and disposed off. Almost nil sludge is produced by the gas cleaner and therefore almost no special handling procedures for sludge are required. Solid particles or discharge of the gas cleaner is generally dry and may be easily handled or disposed thus limiting pollution. Further, useful heat can be recovered during cooling of fuel-gas may be used for heating homes etc. Both particulates and tar are arrested/adsorbed on pre-coated fabric filter media surface and their removal/handling becomes easy. The gas cleaner provides ease of operation and maintenance. The gas cleaner of the present subject matter is saleable. The gas cleaner can be deployed varying size of gasifiers. The gas cleaner can operate for varying size of the gasifier without regards to type of base-fuel used for generating the fuel-gas in the gasifier. The gas cleaner can operate for base-fuels coal wood/woody biomass, lignite, fine and coarse biomass etc. the gas cleaner may be deployed for gasifiers without regards to type of the gasifier. For example the gas cleaner may be deployed for down draft with throat, down draft throat less, updraft gasifier, fluidized based gasifier etc.

## Claims

1. A gas cleaner (**100**) comprising:
a receiver (**102**) configured to receive fuel-gas from a gasifier and the receiver includes a temperature controller (**112**), the temperature controller (**112**) is configured to regulate temperature of the fuel-gas;
a first filter (**104**) coupled to the receiver (**102**) wherein the first filter (**104**) is a fabric filter (**114**) having coating of an inert material and a second layer and the fabric filter (**114**) is configured to operate at a temperature range within which the fuel-gas maintains gaseous state, wherein the temperature range is 240 °C and 370 °C;
a condenser (**106**) coupled to the first filter (**104**), the condenser (**106**) configured control the temperature of the fuel-gas to obtain condensate by condensing constituents of the fuel-gas that are condensable and to facilitate dissolving constituents of the fuel-gas dissolvable in the condensate; and
a second filter (**108**,**208**), the second filter comprises a fine filter (**128**, **228**) and a pleated filter (**118**,**218**), wherein the fine filter (**128,228**) includes saw dust and the pleated filter (**118,218**) comprises a fabric filter to extract suspended particles from the fuel-gas.

2. The gas cleaner of claim **1**, wherein the second layer includes dolomite powder, chalk powder, talcum powder and the second layer is configured to prevent condensation of the fuel-gas.

3. The gas cleaner of claim **1**, wherein the receiver includes a combustor (**122**), the combustor (**122**) is configured to extract the fuel-gas from the gasifier, and the combustor (**122**) is further configured to burn the fuel-gas to adjust temperature of the fuel-gas and to prevent environmental pollution.

4. The gas cleaner of claim **1,** wherein the temperature controller (**112**) comprises an insulated line and an uninsulated line, and the temperature controller (**112**) is configured to pass the fuel-gas through any one or both of the insulated line and uninsulated line based on temperature of the fuel-gas and configured to supply the fuel-gas to the first filter.

5. The gas cleaner of claim **1**, wherein the condenser comprises a mist eliminator (**136**).

6. The gas cleaner of claim **1,** wherein the gas cleaner further comprises a treatment system, the treatment system is coupled to the condenser (**106**) and configured to treat the condensate.

7. The gas cleaner of claim **1,** wherein the gas cleaner (**100**) is coupled to the gasifier.

8. A method (**300**) comprising:
configuring (**302**) a receiver to receive fuel-gas from a gasifier, wherein the receiver comprises a temperature controller configured for controlling temperature of the fuel-gas;
coupling (**304**) a first filter to the receiver, wherein the first filter is a fabric filter having coating of an inert material and a second layer and the fabric filter is configured to operate at a temperature range within which the fuel-gas maintains gaseous state, wherein the temperature range is 240 °C and 370 °C.;
coupling (**306**) a condenser coupled to the first filter, wherein the condenser configured control the temperature of the fuel-gas to obtain condensate by condensing constituents of the fuel-gas that are condensable and to facilitate dissolving constituents of the fuel-gas dissolvable in the condensate; and
coupling (**308**) the condenser to a second filter, and providing the second filter with a fine filter and a pleated filter, wherein the fine filter includes saw dust and the pleated filter comprises a fabric filter to extracting suspended particles from the fuel-gas.

9. The method of claim **8,** wherein the method includes providing the second layer with dolomite powder, chalk powder, talcum powder to configure the fabric filter to prevent condensation of the fuel-gas.

10. The method of claim **8,** wherein configuring the receiver includes providing a combustor with the receiver, the combustor is configured to extract the fuel-gas from the gasifier, and the combustor is further configured to burn the fuel-gas to adjust temperature of the fuel-gas and to prevent environmental pollution.

11. The method of claim **8,** wherein configuring the receiver includes providing the temperature controller with an insulated line and an uninsulated line, and configuring the temperature controller to pass the fuel-gas through any one or both of the insulated line and uninsulated line based on temperature of the fuel-gas and configured to supply the fuel-gas to the first filter.

12. The method of claim **8,** wherein coupling the condenser includes providing the condenser with a mist eliminator.

13. The method of claim **8,** wherein the method includes coupling (**312**) the receiver to the gasifier.

## Patentansprüche

1. Gasreiniger (100), umfassend:
eine Aufnahme- bzw. Empfangsvorrichtung (102), die konfiguriert ist, Brenngas von einem Vergaser aufzunehmen bzw. zu empfangen, und wobei die Aufnahmevorrichtung einen Temperaturregler (112) umfasst, wobei der Temperaturregler (112) konfiguriert ist, die Temperatur des Brenngases zu regulieren;
einen ersten Filter (104), der mit der Aufnahmevorrichtung (102) gekoppelt ist, wobei der erste Filter (104) ein Gewebefilter (114) mit einer Beschichtung aus einem inerten Material und einer zweiten Schicht ist, und wobei der Gewebefilter (114) konfiguriert ist, bei einem Temperaturbereich zu arbeiten, in dem das Brenngas den gasförmigen Zustand beibehält, wobei der Temperaturbereich 240°C und 370°C beträgt;
einen Kondensator (106), der mit dem ersten Filter (104) gekoppelt ist, wobei der Kondensator (106) konfiguriert ist, die Temperatur des Brenngases dahingehend zu steuern bzw. zu regeln, ein Kondensat durch Kondensieren von kondensierbaren Bestandteilen des Brenngases zu erhalten und das Lösen von Bestandteilen des Brenngases, die in dem Kondensat löslich sind, zu erleichtern; und
einen zweiten Filter (108, 208), wobei der zweite Filter einen Feinfilter (128, 228) und einen Faltenfilter (118, 218) umfasst, wobei der Feinfilter (128, 228) Sägemehl enthält und der Faltenfilter (118, 218) einen Gewebefilter umfasst, um suspendierte Teilchen aus dem Brenngas zu extrahieren.

2. Gasreiniger nach Anspruch 1, wobei die zweite Schicht Dolomitpulver, Kreidepulver, Talkumpulver enthält und die zweite Schicht konfiguriert ist, eine Kondensation des Brenngases zu verhindern.

3. Gasreiniger nach Anspruch 1, wobei die Aufnahmevorrichtung eine Brennkammer (122) umfasst, die Brennkammer (122) konfiguriert ist, das Brenngas aus dem Vergaser zu extrahieren, und wobei die Brennkammer (122) ferner konfiguriert ist, das Brenngas zu verbrennen, um die Temperatur des Brenngases einzustellen und Umweltverschmutzung zu verhindern.

4. Gasreiniger nach Anspruch 1, wobei der Temperaturregler (112) eine isolierte Leitung und eine nicht isolierte Leitung umfasst und wobei der Temperaturregler (112) konfiguriert ist, das Brenngas durch eine oder beide der isolierten Leitung und der nicht isolierten Leitung basierend auf der Temperatur des Brenngases zu leiten, und konfiguriert ist, das Brenngas dem ersten Filter zuzuführen.

5. Gasreiniger nach Anspruch 1, wobei der Kondensator einen Tropfenabscheider (136) umfasst.

6. Gasreiniger nach Anspruch 1, wobei der Gasreiniger ferner ein Behandlungssystem umfasst, wobei das Behandlungssystem mit dem Kondensator (106) gekoppelt ist und konfiguriert ist, das Kondensat zu behandeln.

7. Gasreiniger nach Anspruch 1, wobei der Gasreiniger (100) mit dem Vergaser gekoppelt ist.

8. Verfahren (300), umfassend:
Konfigurieren (302) einer Aufnahme- bzw. Empfangsvorrichtung dahingehend, Brenngas von einem Vergaser aufzunehmen bzw. zu empfangen, wobei die Aufnahmevorrichtung einen Temperaturregler umfasst, der zum Steuern bzw. Regeln der e Temperatur des Brenngases konfiguriert ist;
Koppeln (304) eines ersten Filters mit der Aufnahmevorrichtung, wobei der erste Filter ein Gewebefilter mit einer Beschichtung aus einem inerten Material und einer zweiten Schicht ist, und wobei der Gewebefilter konfiguriert ist, bei einem Temperaturbereich zu arbeiten, in dem das Brenngas den gasförmigen Zustand beibehält, wobei der Temperaturbereich 240°C und 370°C beträgt;
Koppeln (306) eines Kondensators mit dem ersten Filter, wobei der Kondensator konfiguriert ist, die Temperatur des Brenngases dahingehend zu steuern bzw. zu regeln, ein Kondensat durch Kondensieren von kondensierbaren Bestandteilen des Brenngases zu erhalten und das Lösen von Bestandteilen des Brenngases, die in dem Kondensat löslich sind, zu erleichtern; und
Koppeln (308) des Kondensators mit einem zweiten Filter und Bereitstellen bzw. Versehen des zweiten Filters mit einem Feinfilter und einem Faltenfilter, wobei der Feinfilter Sägemehl enthält und der Faltenfilter einen Gewebefilter umfasst, um suspendierte Teilchen aus dem Brenngas zu extrahieren.

9. Verfahren nach Anspruch 8, wobei das Verfahren das Bereitstellen bzw. Versehen der zweiten Schicht mit Dolomitpulver, Kreidepulver, Talkumpuder umfasst, um den Gewebefilter dahingehend zu konfigurieren, eine Kondensation des Brenngases zu verhindern.

10. Verfahren nach Anspruch 8, wobei das Konfigurieren der Aufnahmevorrichtung das Bereitstellen bzw. Versehen einer Brennkammer mit der Aufnahmevorrichtung umfasst, wobei die Brennkammer konfiguriert ist, das Brenngas aus dem Vergaser zu extrahieren, und wobei die Brennkammer ferner konfiguriert ist, das Brenngas zu verbrennen, um die Temperatur des Brenngases einzustellen und Umweltverschmutzung zu verhindern.

11. Verfahren nach Anspruch 8, wobei das Konfigurieren der Aufnahmevorrichtung das Bereitstellen bzw. Versehen des Temperaturreglers mit einer isolierten Leitung und einer nicht isolierten Leitung und das Konfigurieren des Temperaturreglers dahingehend umfasst, das Brenngas durch eine oder beide der isolierten Leitung und der nicht isolierten Leitung basierend auf der Temperatur des Brenngases zu leiten, und konfiguriert zu sein, das Brenngas dem ersten Filter zuzuführen.

12. Verfahren nach Anspruch 8, wobei das Koppeln des Kondensators das Bereitstellen bzw. Versehen des Kondensators mit einem Tropfenabscheider umfasst.

13. Verfahren nach Anspruch 8, wobei das Verfahren das Koppeln (312) der Aufnahmevorrichtung mit dem Vergaser umfasst.

## Revendications

1. Purificateur de gaz (100) comprenant:
un récepteur (102) configuré pour recevoir du gaz combustible d'un gazéifieur et le récepteur comprend un contrôleur de température (112), le contrôleur de température (112) est configuré pour réguler la température du gaz combustible;
un premier filtre (104) couplé au récepteur (102) dans lequel le premier filtre (104) est un filtre en tissu (114) avec un revêtement d'un matériau inerte et une deuxième couche et le filtre en tissu (114) est configuré pour fonctionner dans une plage de température dans laquelle le gaz combustible garde son état gazeux, dans lequel la plage de température est de 240°C et de 370°C;
un condenseur (106) couplé au premier filtre (104), le condenseur (106) est configuré pour contrôler la température du gaz combustible pour obtenir un condensé par condensation des constituants du gaz combustible qui peuvent être condensés et pour faciliter la dissolution des constituants du gaz combustible solubles dans le condensé; et
un deuxième filtre (108, 208), le deuxième filtre comprend un filtre fin (128, 228) et un filtre plissé (118, 218), dans lequel le filtre fin (128, 228) comprend de la sciure et le filtre plissé (118, 218) comprend un filtre en tissu pour extraire les particules en suspension du gaz combustible.

2. Purificateur de gaz selon la revendication 1, dans lequel la deuxième couche comprend de la poudre de dolomite, de la poudre de craie, de la poudre de talc et la deuxième couche est configurée pour empêcher la condensation du gaz combustible.

3. Purificateur de gaz selon la revendication 1, dans lequel le récepteur comprend une chambre de combustion (122), la chambre de combustion (122) est configurée pour extraire le gaz combustible du gazéifieur, et la chambre de combustion (122) est en outre configurée pour brûler le gaz combustible pour régler la température du gaz combustible et pour empêcher une pollution de l'environnement.

4. Purificateur de gaz selon la revendication 1, dans lequel le contrôleur de température (112) comprend une ligne isolée et une ligne non isolée, et le contrôleur de température (112) est configuré pour faire passer le gaz combustible à travers l'une quelconque ou les deux de la ligne isolée et de la ligne non isolée sur base de la température du gaz combustible et est configuré pour fournir le gaz combustible au premier filtre.

5. Purificateur de gaz selon la revendication 1, dans lequel le condenseur comprend un dévésiculeur (136).

6. Purificateur de gaz selon la revendication 1, dans lequel le purificateur de gaz comprend en outre un système de traitement, le système de traitement est couplé au condenseur (106) et est configuré pour traiter le condensé.

7. Purificateur de gaz selon la revendication 1, dans lequel le purificateur de gaz (100) est couplé au gazéifieur.

8. Procédé (300) comprenant:
la configuration (302) d'un récepteur pour recevoir du gaz combustible d'un gazéifieur, dans lequel le récepteur comprend un contrôleur de température configuré pour contrôler la température du gaz combustible;
le couplage (304) d'un premier filtre au récepteur, dans lequel le premier filtre est un filtre en tissu avec un revêtement d'un matériau inerte et une deuxième couche et le filtre en tissu est configuré pour fonctionner dans une plage de température dans laquelle le gaz combustible garde l'état gazeux, dans lequel la plage de température est de 240°C et de 370°C;
le couplage (306) d'un condenseur couplé au premier filtre, dans lequel le condenseur est configuré pour contrôler la température du gaz combustible en vue d'obtenir un condensé par condensation des constituants du gaz combustible qui peuvent être condensés et pour faciliter le dissolution des constituants du gaz combustible solubles dans le condensé;
et
le couplage (308) du condenseur à un deuxième filtre, et la fourniture au deuxième filtre d'un filtre fin et d'un filtre plissé, dans lequel le filtre fin comprend de la sciure et le filtre plissé comprend un filtre en tissu pour extraire les particules en suspension du gaz combustible.

9. Procédé selon la revendication 8, dans lequel le procédé comprend le fait de fournir à la deuxième couche de la poudre de dolomite, de la poudre de craie, du talc en poudre pour configurer le filtre en tissu en vue d'empêcher la condensation du gaz combustible.

10. Procédé selon la revendication 8, dans lequel la configuration du récepteur comprend la fourniture du récepteur à une chambre de combustion, la chambre de combustion est configurée pour extraire le gaz combustible du gazéifieur, et la chambre de combustion est en outre configurée pour brûler le gaz combustible pour régler la température du gaz combustible et empêcher une pollution de l'environnement.

11. Procédé selon la revendication 8, dans lequel la configuration du récepteur comprend la fourniture d'une ligne isolée et d'une ligne non isolée au contrôleur de température, et la configuration du contrôleur de température pour faire passer le gaz combustible à travers l'une quelconque ou les deux de la ligne isolée et de la ligne non isolée sur base de la température du gaz combustible et est configuré pour fournir le gaz combustible au premier filtre.

12. Procédé selon la revendication 8, dans lequel le couplage du condenseur comprend la fourniture d'un dévésiculeur au condenseur.

13. Procédé selon la revendication 8, dans lequel le procédé comprend le couplage (312) du récepteur au gazéifieur.
